# EUROPÄISCHE PATENTANMELDUNG

(11) **EP 1 099 893 A1**
(43) Veröffentlichungstag der Anmeldung: **16.05.2001**
(21) Anmeldenummer: 00123797.3
(22) Anmeldetag: 02.11.2000
(51) Int. Cl.: F16L 1/16

(54) **Verfahren zum Verlegen von Rohrleitungen im Meer bzw. in grösseren Binnengewässern**

(30) Priorität: 11.11.1999 DE 19954430
(71) Anmelder: Karl-Heinz Krah GmbH Werkzeug- und Vorrichtungsbau, 57520 Schutzbach (DE)
(72) Erfinder: Krah, Karl-Heinz, Dipl.-Ing., 57567 Daaden-Biersdorf (DE)
(74) Vertreter: KEIL & SCHAAFHAUSEN

(57) **Zusammenfassung**

Es wird ein Verfahren zum Verlegen von Rohrleitungen im Meer bzw. in größeren Binnengewässern beschrieben, wonach zunächst die einzelnen Rohre an Land miteinander verbunden und danach die Rohrleitung durch ein Schiff zur Verlegestelle gezogen und dort abgesenkt wird. Damit schwächer dimensionierte Rohrleitungen verwendet werden können, ohne dass damit eine Gefährdung der Rohrleitung verbunden ist, soll die Rohrleitung unmittelbar nach dem Zusammenfügen der einzelnen Rohrsegmente geflutet werden, wobei entlang der Rohrleitung Auftriebskörper angebracht werden, die so bemessen sind, dass die an den Auftriebskörpern hängende Rohrleitung etwas unterhalb der Wasseroberfläche schwebt und so schwimmend zur Verlegestelle gebracht und dort kontrolliert abgesenkt wird.

## Beschreibung

Die Erfindung betrifft ein Verfahren zum Verlegen von Rohrleitungen im Meer bzw. in größeren Binnengewässern, wobei zunächst die einzelnen Rohre an Land miteinander verbunden werden und danach die Rohrleitung bzw. Rohrleitungsabschnitte durch ein Schiff oder dgl. schwimmend zur Verlegestelle gezogen und dort abgesenkt werden.

Wenn Rohrleitungen im Meer oder in größeren Binnengewässern verlegt werden sollen, werden die zu versenkenden Rohrleitungssegmente zunächst an Land zugfest zusammengefügt und ggf. mit Gewichten beschwert. Dasjenige Ende der Rohrleitung, das zu vorderst in das Wasser gezogen wird, wird heutzutage meist durch einen Blindflansch verschlossen, an dem sich ggf. ein Flutungsventil befindet. Danach wird die mit Luft gefüllte Rohrleitung durch ein Schiff oder dgl. in das Gewässer gezogen, wo sie aufschwimmt, da die Rohrleitung einen Schwimm- bzw. Auftriebskörper darstellt. Nachdem die Rohrleitung oder entsprechende Rohrleitungsabschnitte durch das Gewässer bis zu einer bestimmungsgemäßen Position gezogen wurden, was nur bei guter Wetterlage und möglichst keinem Wellengang erfolgen kann, wird die Rohrleitung abgesenkt. Hierzu wird die Rohrleitung durch das Ventil am Blindflansch mit Wasser geflutet. Das Wasser strömt in die Rohrleitung und drängt die darin befindliche Luft nach draußen. Dadurch verringert sich der Auftrieb und die Rohrleitung beginnt zu sinken. Aufgrund der sich während des Flutens in der Rohrleitung bildenden Luftblasen können die Rohrleitung bzw. die Rohrleitungsabschnitte während des Absenkvorgangs in Bewegung geraten. Diese Bewegung wiederum überträgt sich auf die sich bereits in der Rohrleitung befindlichen großen Wassermengen, was zur Folge hat, dass der gesamte Absenkvorgang in eine unkontrollierte Phase geraten und damit die Absenkung gefährden kann. Um dieses zu verhindern, werden die Rohrleitung bzw. die Rohrleitungsabschnitte von dem ziehenden Schiff oder dgl. unter eine hohe Zugspannung gesetzt, was die Rohrleitung sehr stark belastet, so dass die Rohrleitung eine sehr große Längskraftstabilität aufweisen muss.

Aufgabe der Erfindung ist es daher, ein Verfahren der eingangs genannten Art zum Verlegen von Rohrleitungen im Meer bzw. in großen Binnengewässern zur Verfügung zu stellen, das es erlaubt, schwächer dimensionierte Rohrleitungen zu verwenden, ohne dass damit eine Gefährdung der Rohrleitung verbunden ist.

Diese Aufgabe wird erfindungsgemäß dadurch gelöst, dass die Rohrleitung bzw. die Rohrleitungsabschnitte unmittelbar nach dem Zusammenfügen der einzelnen Rohrsegmente geflutet werden, dass entlang der Rohrleitung bzw. der Rohrleitungsabschnitte an diesen Auftriebskörper angebracht werden, die so bemessen sind, dass die an den Auftriebskörper hängende Rohrleitung bzw. die Rohrleitungsabschnitte etwas unterhalb der Wasseroberfläche schweben und so schwimmend zur Verlegestellte gebracht und dort kontrolliert abgesenkt werden. Da bei dem erfindungsgemäßen Verfahren die Rohrleitung bzw. die Rohrleitungsabschnitte bei ihrer Einbringung in das Gewässer sofort geflutet werden, ist ein Blindflansch am Ende der Rohrleitung nicht mehr erforderlich. Auch befindet sich in der schwimmenden Rohrleitung keine Luft mehr, die zum Absenken der Rohrleitung durch ein Ventil am Blindflansch am Ende der Rohrleitung entweichen müsste, so dass sich auch keine Luftblasen in der Rohrleitung bilden können, die zu gefährlichen unkalkulierten Bewegungen der Rohrleitung führen können.

Ein besonderes Merkmal der vorliegenden Erfindung besteht darin, dass die unterhalb der Wasseroberfläche transportierte Rohrleitung bzw. die Rohrleitungsabschnitte gesehen und geortet werden können. Dieses ist insbesondere während des Transportes zum Bestimmungsort von großem Vorteil.

Es hat sich auch als vorteilhaft erwiesen, dass die für den Transport der Rohrleitung bzw. der Rohrleitungsabschnitte gewünschte Absenktiefe erfindungsgemäß durch die Länge der Aufhängung der Rohrleitung an den Auftriebskörpern bestimmbar ist. Als Aufhängung dient dabei zweckmäßigerweise ein Seil oder dgl., mit dem die einzelnen Auftriebskörper an der Rohrleitung bzw. den Rohrleitungsabschnitten befestigt sind. Damit lässt sich leicht die gewünschte Eintauchtiefe der Rohrleitung unterhalb der Wasseroberfläche einstellen. Die notwendige Absenktiefe kann auch durch die jeweilige Wetterlage bzw. den jeweiligen Wellengang bestimmt sein.

Die Verwendung von Seilen oder dgl. als Aufhängung für die Rohrleitung bzw. die Rohrleitungsabschnitte an den einzelnen Auftriebskörpern ermöglicht, die Länge der Aufhängung der Rohrleitung an den Auftriebskörpern leicht zu verändern.

Die Auftriebskörper können erfindungsgemäß auch an der Rohrleitung bzw. den Rohrleitungsabschnitten angebracht werden.

Damit die Rohrleitung bzw. die Rohrleitungsabschnitte nicht direkt und unkontrolliert in die Tiefe absinken, wird die Rohrleitung bzw. der Rohrleitungsabschnitt durch Fluten der Auftriebskörper kontrolliert abgesenkt. Damit lässt sich die Rohrleitung kontrolliert auf dem Meeres- bzw. Gewässerboden positionieren, ohne dass die Rohrleitung extremen Zugbelastungen ausgesetzt wird.

Das Absenken der Rohrleitung bzw. der Rohrleitungsabschnitte kann in einfacher Weise auch durch Ablassen der Luft aus den elastischen aufblasbaren Auftriebskörpern erfolgen.

Da es sich bei den Auftriebskörpern um einzelne Schwimmkörper handelt, lassen diese sich nach dem Absenkvorgang bergen und wiederverwenden. Dadurch lassen sich die Verlegekosten erheblich reduzieren.

Falls eine auf dem Meeresboden liegende Rohrleitung wieder geborgen werden muss, kann dieses in umgekehrter Reihenfolge erfolgen, wie dies oben zum Verlegen beschrieben ist. Dabei sind zunächst die einzelnen Auftriebskörper an der Rohrleitung anzubringen und soweit mit Luft zu befüllen, dass die Rohrleitung bis kurz unterhalb der Wasseroberfläche angehoben wird. Dann kann die Rohrleitung in einzelne Rohrleitungsabschnitte zerlegt werden. Dieses kann wie bei der Teilmontage der Rohrleitung nahe der Wasseroberfläche durch Taucher erfolgen. Danach werden die Rohrleitung bzw. die Rohrleitungsabschnitte schwimmend an Land gebracht und dort in ihrer einzelnen Rohrsegmente zerlegt.

Das erfindungsgemäße Verfahren zum Verlegen von Rohrleitungen im Meer bzw. in größeren Binnengewässern läuft im wesentlichen wie folgt ab:

Zunächst werden die zu versenkenden Rohrleitungssegmente an Land zugfest zusammengefügt und ggf. mit zusätzlichen Gewichten belastet. Danach wird die Rohrleitung bzw. einzelne Rohrleitungsabschnitte zu Wasser gebracht, wobei durch das vorne offene Rohr Wasser in die Rohrleitung bzw. den Rohrleitungsabschnitt eindringen kann. Damit die Rohrleitung nun nicht direkt und unkontrolliert in die Tiefe absinkt, sondern zunächst an der Wasseroberfläche aufschwimmt, sind entlang der Rohrleitung bzw. den Rohrleitungsabschnitten Schwimmkörper angebracht. Diese können entweder unmittelbar an der Rohrleitung bzw. den Rohrleitungsabschnitten angebracht sein oder über Seile oder ähnliche Aufhängungen. Die Schwimmkörper sollen dabei insbesondere bojenartig sein und einen Auftrieb haben, der die gesamte Rohrleitung bzw. die einzelnen Rohrleitungsabschnitte etwas unterhalb der Wasseroberfläche schweben lässt.

Ist der Auftrieb der Auftriebs- oder Schwimmkörper größer als das Rohrleitungsgewicht, schwimmen die Auftriebskörper auf der Wasseroberfläche. Die Rohrleitung bzw. Rohrleitungsabschnitte lassen sich nun mittels der Seile oder ähnlichen Aufhängungen auf eine gewünschte Tiefe unterhalb der Wasseroberfläche absenken. Die Rohrleitung bzw. die Rohrleitungsabschnitte sollen dabei so weit unterhalb der Wasseroberfläche schweben, dass sie auch im Fall eines höheren Wellenganges nicht stärkeren äußeren Belastungen ausgesetzt sind. Dennoch sollen sie aber noch gesehen und geortet werden können.

Hat das Schiff oder sonstige Transportmittel die vorbestimmte Position erreicht, an der die Rohrleitung bzw. die Rohrleitungsabschnitte abgesenkt werden sollen, werden die Auftriebskörper kontrolliert geflutet bzw. wird bei den elastischen Schwimmkörpern (Bojen) die Luft abgelassen. Dadurch werden die Rohrleitung bzw. die Rohrleitungsabschnitte kontrolliert abgesenkt, bis sie auf dem Meeres- bzw. Gewässergrund aufliegen.

Da weder beim Transport der Rohrleitung noch beim Absenkvorgang die einzelnen Rohrleitungsabschnitte extremen Zugbelastungen ausgesetzt sind, können die Rohre wesentlich schwächer dimensioniert sein, als dies bei den mit herkömmlichen Verlegeverfahren verwendeten Rohren der Fall ist. Damit lassen sich auch die Projektkosten für die oben beschriebene Verlegung erheblich senken.

Die Ausgestaltung der Auftriebs- oder Schwimmkörper ist im wesentlichen abhängig von der zu verlegenden Rohrleitung und den Wetter- und Wasserbedingungen. Sollten stabile Schwimmkörper von Nöten sein, sind dies insbesondere tonnenförmige Auftriebskörper, die üblicherweise direkt an den Rohrleitungsabschnitten befestigt werden. Das kontrollierte Absenken der Rohrleitung erfolgt dabei durch Fluten dieser Schwimmkörper.

Sollten einzelne elastische Schwimmkörper (Bojen, Ballons) zum Einsatz kommen können, erfolgt die kontrollierte Absenkung der Rohrleitung durch kontrolliertes Ablassen der Luft aus den einzelnen Schwimmkörpern.

Sowohl die stabilen als auch die elastischen Schwimmkörper lassen sich nach einem Absenken der Rohrleitung wieder bergen und wiederverwenden.

Insbesondere bei langen Rohrleitungen wie Pipelines werden die Rohrleitungen aus logistischen- und Transportgründen häufig in Abschnitten verlegt, wobei die Teilmontage der Rohrleitung, die mittels Flanschverbindungen erfolgen kann, in der Nähe der Wasseroberfläche durch Taucher erfolgt. Damit die Rohrleitung in einer hierfür zweckmäßigen Tiefe in der Nähe der Wasseroberfläche erfolgen kann, lässt sich die Aufhängungslänge der einzelnen Schwimmkörper individuell verändern. Dieses ist auch von Vorteil für die Einstellung der "Transporttiefe" der Rohrleitung bzw. der Rohrleitungsabschnitte. Dadurch, dass die Teilmontage der Rohrleitung in der Nähe der Wasseroberfäche erfolgen kann, sind keine großen Tauchtiefen erforderlich, wodurch Verlegezeit und Kosten gespart werden können. Die üblicherweise an den Rohrleitungsenden befindlichen Diffussoren können ebenfalls knapp unter der Wasseroberfläche mit der Rohrleitung verbunden werden.

Soll nun eine bereits verlegte Rohrleitung wieder geborgen werden, lässt sich das erfindungsgemäße Verfahren in umgekehrter Reihenfolge anwenden. Dabei sind zunächst die Auftriebs- bzw. Schwimmkörper an der Rohrleitung anzubringen und danach kontrolliert so lange mit Luft zu befüllen, bis die Rohrleitung bzw. die Rohrleitungsabschnitte bis kurz unterhalb der Wasseroberfläche angehoben werden. Danach sind ggf. die einzelnen Rohrleitungsabschnitte in der Nähe der Wasseroberfläche zu demontieren und schwebend abzutransportieren. An Land werden die einzelnen Rohrsegmente dann vollständig zerlegt und weiterverarbeitet, repariert oder entsorgt.

## Patentansprüche

1. Verfahren zum Verlegen von Rohrleitungen im Meer bzw. in größeren Binnengewässern, wobei zunächst die einzelnen Rohre an Land miteinander verbunden werden und danach die Rohrleitung bzw. Rohrleitungsabschnitte durch ein Schiff oder dgl. schwimmend zur Verlegestelle gezogen und dort abgesenkt werden, **dadurch gekennzeichnet,** dass die Rohrleitung bzw. die Rohrleitungsabschnitte unmittelbar nach dem Zusammenfügen der einzelnen Rohrsegmente geflutet werden, dass entlang der Rohrleitung bzw. der Rohrleitungsabschnitte an diesen Auftriebskörper angebracht werden, die so bemessen sind, dass die an den Auftriebskörpern hängende Rohrleitung bzw. die Rohrleitungsabschnitte etwas unterhalb der Wasseroberfläche schweben und so schwimmend zur Verlegestelle gebracht und dort kontrolliert abgesenkt werden.

2. Verfahren nach Anspruch 1, **dadurch gekennzeichnet,** dass die unterhalb der Wasseroberfläche transportierte Rohrleitung bzw. die Rohrleitungsabschnitte gesehen und geortet werden können.

3. Verfahren nach Anspruch 1 oder 2, **dadurch gekennzeichnet,** dass die für den Transport der Rohrleitung bzw. der Rohrleitungsabschnitte gewünschte Absenktiefe durch die Länge der Aufhängung der Rohrleitung an den Auftriebskörpern bestimmt wird.

4. Vorrichtung nach einem der Ansprüche 1 bis 3, **dadurch gekennzeichnet,** dass die Auftriebskörper mittels eines Seiles oder dgl. an der Rohrleitung bzw. den Rohrleitungsabschnitten befestigt sind.

5. Verfahren nach Anspruch 4, **dadurch gekennzeichnet,** dass die Länge der Aufhängung der Rohrleitung bzw. der Rohrleitungsabschnitte an den Auftriebskörpern veränderbar ist.

6. Verfahren nach Anspruch 1 oder 2, **dadurch gekennzeichnet,** dass die Auftriebskörper unmittelbar an der Rohrleitung bzw. den Rohrleitungsabschnitten angebracht werden.

7. Verfahren nach einem der Ansprüche 1 bis 2, **dadurch gekennzeichnet,** dass die Rohrleitung bzw. die Rohrleitungsabschnitte durch Fluten der Auftriebskörper kontrolliert abgesenkt werden.

8. Verfahren nach einem der Ansprüche 1 bis 6, **dadurch gekennzeichnet,** dass die Rohrleitung bzw. die Rohrleitungsabschnitte durch Ablassen der Luft aus den elastischen aufblasbaren Auftriebskörpern kontrolliert abgesenkt werden.

9. Verfahren nach einem der vorhergehenden Ansprüche, **dadurch gekennzeichnet,** dass die Auftriebskörper nach dem Absenken der Rohrleitung bzw. der Rohrleitungsabschnitte geborgen und wiederverwendet werden.

10. Verfahren nach einem der vorhergehenden Ansprüche, dadurch gekennzeichnet, dass das Bergen einer auf dem Meeres- oder Gewässerboden verlegten Rohrleitung in umgekehrter Reihenfolge erfolgt, d.h. Anbringen von Auftriebskörpern an der Rohrleitung bzw. den Rohrleitungsabschnitten, Anheben der Rohrleitung bzw. der Rohrleitungsabschnitte bis kurz unterhalb der Wasseroberfläche, ggf. Demontage einzelner Rohrleitungsabschnitte nahe der Wasseroberfläche, schwimmender Abtransport der Rohrleitung bzw. der Rohrleitungsabschnitte und Demontage der einzelnen Rohrsegmente an Land.
